# EUROPÄISCHE PATENTSCHRIFT

(11) **EP 3 044 759 B1**
(45) Veröffentlichungstag und Bekanntmachung des Hinweises auf die Patenterteilung: **30.09.2020**
(21) Anmeldenummer: 14772052.8
(22) Anmeldetag: 11.09.2014
(51) Int. Cl.: G06T 7/70, G06K 9/00, G06T 7/20

(54) **VERFAHREN ZUR ANALYSE DER RÄUMLICHEN AUSDEHNUNG VON FREIEN WARTESCHLANGEN**
METHOD FOR ANALYSIS OF THE SPATIAL EXPANSION OF FREE QUEUES
PROCÉDÉ D'ANALYSE DE L'EXPANSION SPATIALE DE FILES D'ATTENTE LIBRES

(30) Priorität: 13.09.2013 EP 13405111
(43) Veröffentlichungstag der Anmeldung: 20.07.2016
(73) Patentinhaber: Xovis AG, 3052 Zollikofen (CH)
(72) Erfinder: GYGER, Cyrill, 4500 Solothurn (CH); HERRLI ANDEREGG, Markus, 3112 Allmendingen (CH); STUDER, David, 2555 Brügg BE (CH)
(74) Vertreter: Keller & Partner Patentanwälte AG
(86) Internationale Anmeldenummer: PCT/CH2014/000128
(87) Internationale Veröffentlichungsnummer: WO 2015/035524

(56) Entgegenhaltungen:
- US-A1- 2003 107 649
- US-A1- 2009 034 846
- US-A1- 2009 222 388
- HARITAOGLU I ET AL: "Detection and tracking of shopping groups in stores", PROCEEDINGS 2001 IEEE CONFERENCE ON COMPUTER VISION AND PATTERN RECOGNITION. CVPR 2001. KAUAI, HAWAII, DEC. 8 - 14, 2001; [PROCEEDINGS OF THE IEEE COMPUTER CONFERENCE ON COMPUTER VISION AND PATTERN RECOGNITION], LOS ALAMITOS, CA, IEEE COMP. SOC, US, Bd. 1, 8. Dezember 2001 (2001-12-08), Seiten 431-438, XP010583777, ISBN: 978-0-7695-1272-3
- YUNYOUNG NAM: "Crowd flux analysis and abnormal event detection in unstructured and structured scenes", MULTIMEDIA TOOLS AND APPLICATIONS, 17. Juli 2013 (2013-07-17), XP055094739, ISSN: 1380-7501, DOI: 10.1007/s11042-013-1593-7
- CHERIYADAT A M ET AL: "Detecting Dominant Motions in Dense Crowds", IEEE JOURNAL OF SELECTED TOPICS IN SIGNAL PROCESSING, IEEE, US, Bd. 2, Nr. 4, 1. August 2008 (2008-08-01), Seiten 568-581, XP011235068, ISSN: 1932-4553, DOI: 10.1109/JSTSP.2008.2001306
- Vasu Parameswaran ET AL: "Design and Validation of a System for People Queue Statistics Estimation" In: "Video Analytics for Business Intelligence", 1. Januar 2012 (2012-01-01), Springer Berlin Heidelberg, Berlin, Heidelberg, XP055094775, ISSN: 1860-949X ISBN: 978-3-64-228598-1 Bd. 409, Seiten 355-373, DOI: 10.1007/978-3-642-28598-1_11, das ganze Dokument
- Simon Bang Jacobsen: "Queue Assessment via Images", , 31 December 2012 (2012-12-31), XP055600789, Retrieved from the Internet: URL:http://www2.imm.dtu.dk/pubdb/views/edo c_download.php/6415/pdf/imm6415.pdf [retrieved on 2019-06-28]

## Beschreibung

### Technisches Gebiet

Die Erfindung betrifft ein Verfahren zur Bestimmung der räumlichen Ausdehnung einer freien Warteschlange, ausgehend von Positionsinformationen.

### Stand der Technik

Im Bereich der Personenüberwachung zwecks Zählung, Passagierflusssteuerung, Prozessoptimierung, Verhaltensanalyse etc. ist es oftmals erwünscht, wartende Personen zu bestimmen und zu messen. So interessiert beispielsweise, wie lange eine Person bis zu einer Abfertigung warten musste und wie lange Personen voraussichtlich warten müssen, wenn sie soeben für die Abfertigung anzustehen beginnen. Deshalb ist es insbesondere ein Bedürfnis, sich bildende Warteschlangen erkennen zu können und die Personen, die zu dieser Warteschlange zählen, zeitlich analysieren zu können.

Warteschlangen bilden sich oft spontan. Die Form einer Warteschlange kann durch ein so genanntes Lining vorgegeben werden, welches die wartenden Personen kanalisiert und dadurch einen fest vorgegebenen Bereich für die Wartenden definiert. Fehlt solch ein Lining oder definiert das Lining die Anordnung der Personen in der Warteschlange nicht eindeutig, bildet sich die Form der Warteschlange jedoch in unvorhersehbarer Weise. Als Beispiel sei hier das Anstehen vor einem Fahrkartenautomaten genannt: An Stellen, an denen bis vor kurzen noch Personen durchgingen, kann sich plötzlich eine Warteschlange bilden, so dass die vorbeigehenden Personen einen anderen Weg nehmen müssen. Wird die Warteschlange länger, kann sich ihre Form spontan ändern, beispielsweise aufgrund vorherrschender baulicher Hindernisse (Wände, Säulen, Strassen usw.).

Derartige Warteschlangen werden in der Folge als "freie Warteschlangen" bezeichnet. Darunter wird vorliegend eine Warteschlange verstanden, deren Mitglieder sich in einem im Wesentlichen zusammenhängenden Gebiet befinden und deren Endposition (Ort eines Schalters, eines Automaten, eines Durchlasses etc.) bekannt ist, nicht jedoch die Position des Beginns der Warteschlange und die Form der Warteschlange innerhalb eines echt zweidimensionalen Gebiets.

Soll die Erkennung und Analyse der Warteschlange automatisiert erfolgen, beispielsweise auf der Basis von Bildinformationen, die von geeigneten Bildsensoren erfasst werden, ergeben sich bei freien Warteschlangen die folgenden Herausforderungen:
- Der Beginn der Warteschlange, also der Ort oder das Gebiet, wo sich neue Wartende anstellen, ist nicht bekannt.
- Die Form und Bewegung (Veränderung) der Warteschlange sind nicht bekannt.
- Im Bereich der Warteschlange können sich Personen befinden, die nicht zur Warteschlange gehören (z. B. durch die Warteschlange hindurch laufen).
- Die Personenpositionen, welche durch geeignete Sensoren, beispielsweise Sensoren zur Generierung von Bildinformationen oder generell Positionsinformationen, bereitgestellt werden und die Basis einer Auswertung bilden, sind nicht jederzeit fehlerfrei.
- Es gibt Personen, welche drängeln oder zurückfallen und damit das Gesamtbild der Warteschlange verfälschen.

Aus dem Stand der Technik sind Verfahren zur automatisierten Analyse von Warteschlangen auf der Basis von Positionsinformationen bekannt.

Die US 5,953,055 (NCR Corp.) beschreibt ein System und Verfahren zum Detektieren, Sammeln von Informationen und Analysieren einer Warteschlange anhand einer Sequenz von Videobildern. Insbesondere werden Bewegungsmuster, die Anzahl der Personen in der Warteschlange und die durchschnittliche Wartezeit bestimmt. Zwei unterschiedliche Algorithmen werden für "strukturierte" und "unstrukturierte" Warteschlangen vorgeschlagen; strukturierte Warteschlangen sind solche, die im Wesentlichen gerade sind und an einem vorgegebenen Ort positioniert sind, unstrukturierte Warteschlangen bilden sich dann, wenn Kunden an einen Schalter gerufen werden und solange z. B. sitzend warten. Bei beiden Algorithmen wird zunächst eine Differenz zwischen aufeinanderfolgenden Videobildern bestimmt, um Objekte anhand von deren Bewegung vom Hintergrund abzugrenzen. Pixeln, in welchen sich Objekte befinden, wird der Wert 1 zugeordnet. Im Rahmen des ersten, pixelbasierten Algorithmus wird die Anzahl der Personen in der Warteschlange dann bestimmt, indem der Bereich der Warteschlange in vertikale Schlitze unterteilt wird, die jeweils ungefähr der Ausdehnung einer wartenden Person entsprechen. Im Rahmen des zweiten, segmentbasierten Algorithmus werden benachbarte Pixel, welche demselben Objekt entsprechen, identifiziert und dem Objekt zugeordnet. Daraus kann die Anzahl Personen in einer Schlange ermittelt werden. Die Wartezeit in einer Schlange wird anhand von protokollierten Ereignissen, namentlich dem Eintreten oder Verlassen der Schlange, bestimmt.

Die pixelbasierte Methode funktioniert klarerweise nur für geordnete Warteschlangen. Die segmentbasierte Methode ist grundsätzlich auch für freie Warteschlangen anwendbar, wobei eine binäre Maske erstellt wird, die den Aufenthaltsorten von Personen entspricht.

Allerdings trägt die segmentbasierte Methode den spezifischen Eigenschaften von freien Warteschlangen nicht Rechnung. Da sie primär für die Analyse "unstrukturierter" Warteschlangen konzipiert ist und insbesondere Fälle erfasst, in welchen die Mitglieder der Warteschlange sitzend warten, kann die Methode nicht davon ausgehen, dass die Wartenden sich in einem im wesentlichen zusammenhängenden Gebiet befinden. Entsprechend können Kenntnisse über die Dynamik in solchen Warteschlangen nicht für die Wartezeitbestimmung herangezogen werden, und entsprechende Informationen lassen sich auch nicht generieren. Dies verhindert eine vollständige Analyse einer freien Warteschlange und die genaue Bestimmung einer Wartezeit.

Auch die US 8,131,010 B2 (IBM) ist auf die Messung von Eigenschaften einer Warteschlange gerichtet. Dazu werden mehrere Bilder der Warteschlange aufgenommen, Eigenschaften aus den Bildern extrahiert und Eigenschaften einer Mehrzahl aufeinanderfolgender Bilder analysiert, um Übereinstimmungen zu erkennen. Wie die Warteschlange und Objekte darin identifiziert werden, ist nicht genauer ausgeführt, diese Schritte können u. a. manuell erfolgen. Die Wartezeit kann u. a. bestimmt werden, indem einzelne Objekte verfolgt und deren Wartezeit ermittelt wird; wie diese Verfolgung stattfindet, ist ebenfalls nicht im Detail ausgeführt, eine Möglichkeit stellt ein sukzessives Trainieren mit immer mehr Trajektorien dar.

Das System geht von Annahmen bezüglich der Struktur der analysierten Warteschlange aus, die bei freien Warteschlangen nicht gegeben sind. Es ist deshalb für die Analyse von freien Warteschlangen nicht geeignet.

Die WO 2011/020641 A1 (Robert Bosch GmbH) ist auf eine Vorrichtung zur Erkennung einer Schlange von Objekten in einem Überwachungsbereich gerichtet. Die Objekte werden basierend auf einem Überwachungsbild detektiert. Als Schlange werden verschiedenartige Ansammlungen von Objekten verstanden, die an einem oder mehreren Zielorten anstehen. Auf eine Subtraktion des Bildhintergrunds wird explizit verzichtet, ferner können inhaltssensitive Detektoren vorhanden sein. Es kann ein Modellierungsmodul vorhanden sein, mit welchem die Schlange auf Basis der detektierten Objekte modelliert werden kann. Dieses Modul umfasst beispielsweise eine Vielzahl von Warteschlangenmodellen, die verschiedene Versionen von Warteschlangen abdecken. Weiter kann ein Bewegungsanalysemodul vorhanden sein, welches z. B. die Bewegungsrichtung der detektierten Objekte erkennen kann. Auch ein Bewertungsmodul kann vorhanden sein, mit welchem z. B. die durchschnittliche Wartezeit oder die Anzahl der Objekte in der Schlange ermittelbar ist.

Die Druckschrift ist in Bezug auf die konkret durchgeführten Analysen des aufgenommenen Bildes sehr unspezifisch. Daraus geht weder hervor, wie genau der Ort der Schlange erkannt wird, noch wie eine Wartezeit bestimmt wird. Entsprechend lässt sich die beschriebene Vorrichtung auch nicht ohne weiteres zur Analyse freier Warteschlangen einsetzen.

Die WO 2005/055692 A2 (Brickstream Corp.) offenbart Systeme und Verfahren, mittels welchen festgestellt werden kann, ob sich Objekte in einer Schlange befinden. Dazu werden die Positionswerte mehrerer Objekte ermittelt und miteinander verglichen; ergänzend kann die Geschwindigkeit eines der Objekte herangezogen werden. Die Positionswerte ergeben sich aus einer Verfolgung der Objekte, z. B. auf der Basis von Bildern optischer Sensoren. Auch freie, ungeordnete Warteschlangen sind "Schlangen" im Sinn der Anmeldung. Zwei Hauptansätze werden offenbart, um festzustellen, ob Objekte zu einer Schlange gehören oder nicht:
1. Eine Schlangen-Endposition, z. B. der Ort einer Kasse oder eines Schalters wird identifiziert sowie eine daran angrenzende Keimregion. Anschliessend werden die Pfade von Objekten, die sich aktuell in der Keimregion befinden, identifiziert. Unerwünschte Pfade können anhand von verschiedenen Kriterien herausgefiltert werden. Die verbleibenden Pfade werden dann der Schlange hinzugefügt. Weitere Objekte können der Schlange zugeordnet werden, wenn deren Positionsänderung in einem bestimmten Zeitintervall einen gewissen Grenzwert nicht überschreitet bzw. sich in einem bestimmten Bereich befindet. Objekte können ferner der Schlange zugeordnet werden, wenn deren (skalare) Geschwindigkeit in einem bestimmten Bereich liegt.
2. Verbleibende Pfade werden daraufhin untersucht, ob sie Parameter erfüllen, welche von der Schlange bereits zugeordneten Pfaden erfüllt werden. Ist dies der Fall, werden sie ebenfalls der Schlange zugeordnet.
Dieses System ermöglicht grundsätzlich auch die Analyse freier Warteschlangen. Allerdings erfordert es aufwendige Berechnungen, und je nach Dynamik der Objektbewegungen in der freien Warteschlange ergeben sich Schwierigkeiten bei der Auswertung.
US 2009/222388 A1 (Hua) beschreibt wie die Eigenschaften von Massen von Objekten erfasst werden können. Die Methoden sollen explizit nicht ausschliesslich für Warteschlangen nutzbar sein. Das Bild der Kamera wird in Zellen geteilt. Dann wird eine Region of Interest (ROI) definiert und alle Objekte in der ROI sollen zur Warteschlange gehören. Die Objekte in der Warteschlange werden erkannt und ihre Trajektorien aufgenommen.
Simon Bang Jacobsen "Queue Assessment via Images", 31. Dezember 2012 (2012-12-31), Gefunden im Internet:
URL:
http://www2.imm.dtu.dk/pubdb/views/edoc_download.php/6415/pdf/imm6415.pdf, offenbart ein System zur Bestimmung von Warteschlangen und deren Wartezeiten unter Verwendung von Bewegungsbalken.

### Darstellung der Erfindung

Aufgabe der Erfindung ist es, dem eingangs genannten technischen Gebiet zugehörende Verfahren zur Bestimmung der räumlichen Ausdehnung einer freien Warteschlange zu schaffen, welche eine effiziente Analyse freier Warteschlangen ermöglichen und präzise Ergebnisse liefern können.
Die Lösung der Aufgabe ist durch die Merkmale des Anspruchs 1 definiert. Gemäss der Erfindung umfasst ein Verfahren zur Bestimmung der räumlichen Ausdehnung einer freien Warteschlange, ausgehend von Positionsinformationen, folgende Schritte:
a) Unterteilen eines Überwachungsbereichs, welcher die freie Warteschlange umfasst, in eine Mehrzahl von Positionen;
b) ausgehend von den Positionsinformationen Erkennen von Objekten, welche der freien Warteschlange zugeordnet sind;
c) Verfolgen der erkannten Objekte;
d) periodische Speicherung einer aktuellen Position zumindest eines Teils der verfolgten Objekte;
e) Bestimmen einer durchschnittlichen Geschwindigkeit zumindest eines Teils der Objekte, wobei die durchschnittliche Geschwindigkeit eines Objekts anhand mehrerer der gespeicherten Positionen des jeweiligen Objekts bestimmt wird;
f) in Abhängigkeit der bestimmten durchschnittlichen Geschwindigkeiten Erstellen einer ersten Karte, in welcher in Bezug auf die Positionen im Überwachungsbereich eine Auftretensdichte von Objekten an den entsprechenden Positionen verzeichnet ist, indem Objekte mit einer durchschnittlichen Geschwindigkeit ausserhalb eines vorgegebenen Bereichs nicht bei der Erstellung der ersten Karte berücksichtigt werden;
g) ausgehend von einem vorgegebenen Ausgangsbereich der freien Warteschlange Durchführen eines Floodfill-Verfahrens zur Erzeugung eines zusammenhängenden Bereichs, welcher der Ausdehnung der freien Warteschlange entspricht, wobei für eine Validitätsprüfung die erste Karte herangezogen wird.

Dieses Verfahren ist insbesondere zur Analyse von Warteschlangen geeignet, die durch Personen gebildet werden. Grundsätzlich ist es aber auch für freie Ansammlungen anderer "wartender" Objekte geeignet, z. B. von Tieren vor einem Einlass, von Artikeln in einem Trichterbereich vor einem Durchlass usw.

Hier werden insbesondere Bildinformationen verarbeitet, die in gerasterter Form vorliegen, d. h. als eine gewisse Anzahl von Bildpunkten (Pixeln) mit einem gewissen Helligkeits- und/oder Farbwert. Der hier verwendete Begriff "Position" bezieht sich stets auf einen gewissen Bereich des physischen Raums, also einen Flächenbereich bei der zweidimensionalen Analyse einer Warteschlange bzw. einen Raumbereich bei der dreidimensionalen Analyse einer Warteschlange. Der Bereich kann insbesondere einer gewissen Zahl von Bildpunkten der Bildinformationen entsprechen (z. B. je 1 Pixel, 2x2 Pixel usw.), wobei nicht alle Bereiche gleich grosse sein müssen. Entsprechend "befindet" sich ein Objekt an einer bestimmten Position, wenn das Objekt den Flächenbereich bedeckt, bzw. den Raumbereich ausfüllt. Ein Objekt kann sich somit grundsätzlich gleichzeitig an mehreren (benachbarten) Positionen befinden.

Die Bestimmung der durchschnittlichen Geschwindigkeit eines Objekts erfolgt anhand des zeitlichen Verlaufs der Objektposition. Im einfachsten Fall werden die letzten zwei gespeicherten Objektpositionen herangezogen und die räumliche Distanz durch den zeitlichen Abstand der Aufnahme der entsprechenden Positionsinformationen dividiert. Die Robustheit des erhaltenen Ergebnisses kann verbessert werden, wenn zusätzliche Objektpositionen herangezogen werden. Die Geschwindigkeit kann dann beispielsweise durch einen gemittelten Wert repräsentiert werden, wobei die einzelnen Objektpositionen auch unterschiedlich stark gewichtet werden können (z. B. frühere Positionen mit geringerem Gewicht als kürzlich bestimmte).

Bei der ersten Karte handelt es sich um eine Zuordnung zwischen Flächen- bzw. Raumbereichen und den Aufenthaltswahrscheinlichkeiten dort befindlicher Objekte. Durch die Berücksichtigung der ermittelten Geschwindigkeiten können insbesondere Objekte herausgefiltert werden, welche sich zu schnell bewegen, um Teil der Warteschlange sein zu können (z. B. Personen, die sich nahe an einer Warteschlange vorbei bewegen oder durch diese hindurch gehen). Das Kriterium kann durch einen Schwellenwert repräsentiert werden, wobei Objekte nur dann als Mitglied der Warteschlange berücksichtigt werden, wenn deren Geschwindigkeit den Schwellenwert nicht übersteigt. Bei der durchschnittlichen Geschwindigkeit kann es sich um eine skalare Grösse handeln; wird die durchschnittliche Geschwindigkeit vektoriell, d. h. mit Richtungsinformation, bestimmt, kann auch die Richtung als Kriterium für die Erstellung der ersten Karte herangezogen werden. So dürften sich Objekte, die sich im Wesentlichen entgegen oder quer zur Hauptbewegungsrichtung in der Schlange bewegen, ebenfalls nicht der Warteschlange zugehören. Entsprechend können beispielsweise nur Objekte berücksichtigt werden, deren Richtung in einem bestimmten Winkelbereich relativ zu einer Hauptbewegungsrichtung der Warteschlange liegt oder deren Geschwindigkeitsbetrag einen gewissen Minimalwert nicht übersteigt (d. h. im Wesentlichen stillstehende Personen).

Die Auflösung der ersten Karte kann derjenigen der Positionen entsprechen, d. h. jeder betrachteten Position ist ein Feld in der ersten Karte zugeordnet. Die Karte kann aber auch eine andere, insbesondere eine gröbere, Auflösung haben. So ist es beispielsweise möglich, jeweils mehrere Positionen demselben Feld in der ersten Karte zuzuordnen.

Beim Ausgangsbereich handelt es sich um eine oder mehrere Positionen bzw. ein oder mehrere Felder in der ersten Karte, welche das Ziel der Wartenden darstellen, d. h. einen Schalter, einen Automaten, einen Durchlass usw. Der Ausgangsbereich lässt sich beispielsweise durch eine Übertrittslinie definieren.

Floodfill-Verfahren sind aus der digitalen Bildbearbeitung grundsätzlich bekannt. Ausgehend von einem Bildpunkt (im vorliegenden Fall von einem Feld in der ersten Karte) werden die jeweils benachbarten Bildpunkte bzw. Felder darauf getestet, ob sie ein bestimmtes Kriterium erfüllen (im vorliegenden Fall: ob das Feld eine gewisse Auftretensdichte aufweist). Falls ja, werden diese Felder der gefüllten Menge hinzugefügt. Je nach Geometrie der Felder kann eine unterschiedliche Zahl von Nachbarn berücksichtigt werden, bei quadratischen Feldern in der Ebene z. B. vier Nachbarn oder acht Nachbarn (inkl. diagonal benachbarte Felder).

Das erfindungsgemässe Verfahren ermöglicht eine einfache und effiziente Erkennung der Ausdehnung der freien Warteschlange als "gefüllter Bereich".

Objekte mit einer durchschnittlichen Geschwindigkeit ausserhalb eines vorgegebenen Bereichs werden nicht bei der Erstellung der ersten Karte berücksichtigt. Insbesondere Objekte, deren Geschwindigkeit höher ist als ein gewisser Grenzwert in der Grössenordnung der Fortbewegungsgeschwindigkeit in der Warteschlange, dürften nicht Teil der Warteschlange bilden, sondern sich an dieser vorbei oder durch diese hindurch bewegen. Sie sollen deshalb bei der Analyse der Warteschlange nicht berücksichtigt werden, um diese nicht zu verfälschen. Der Grenzwert kann anhand von Erfahrungswerten fest vorgegeben sein, oder er wird anhand der ermittelten durchschnittlichen Geschwindigkeiten dynamisch bestimmt, beispielsweise indem die Durchschnitts- oder Mediangeschwindigkeit mit einem Faktor multipliziert wird.

In einer bevorzugten Ausführungsform des Verfahrens zur Bestimmung der räumlichen Ausdehnung der freien Warteschlange werden folgende weiteren Schritte ausgeführt:
h) Bestimmen eines Richtungsvektors zumindest eines Teils der Objekte, wobei der Richtungsvektor eines Objekts anhand mehrerer der gespeicherten Positionen des jeweiligen Objekts bestimmt wird;
i) Erstellen einer zweiten Karte, in welcher in Bezug auf die Positionen im Überwachungsbereich die bestimmten Richtungsvektoren der Objekte verzeichnet sind;
j) für jedes Feld der zweiten Karte Ermitteln eines durchschnittlichen Richtungsvektors;
k) anhand der ermittelten durchschnittlichen Richtungsvektoren Identifizieren häufiger Trajektorien während einer vorgegebenen vergangenen Periode;
l) für mindestens einige der identifizierten häufigen Trajektorien Ergänzen von Informationen in der ersten Karte, betreffend die Auftretensdichte von Objekten an Positionen, die den Trajektorien zugehören.

Der Einbezug der Bewegungsrichtung ermöglicht eine verfeinerte Analyse der freien Warteschlange. Die Felder der zweiten Karte können den Positionen der ersten Karte entsprechen. Dies ist aber nicht zwingend, die Auflösung und/oder Aufteilung des Überwachungsbereichs kann in der zweiten Karte anders sein als in der ersten Karte. Eine Trajektorie wird beispielsweise als häufig erkannt, wenn in einer vorgegebenen Anzahl von Feldern die ermittelten durchschnittlichen Richtungsvektoren um nicht mehr als einen vorgegebenen Winkelabstand voneinander abweichen. Felder, die Positionen mit einer geringen durchschnittlichen Geschwindigkeit unterhalb eines unteren Grenzwertes entsprechen, können von der Analyse ausgenommen werden, damit Richtungsvektoren, die aufgrund von zufälligen Bewegungen ermittelt wurden, das Ergebnis nicht verfälschen.

Mit Vorteil wird ausgehend von der ersten Karte eine Stoppmaske erzeugt, welche Positionen ohne Aktivität umfasst, und die Stoppmaske wird für die Validitätsprüfung des Floodfill-Verfahrens herangezogen. Dadurch werden ruhende Objekte, z. B. Gegenstände, die sich im Überwachungsbereich befinden, von der Analyse ausgeschlossen. Die Analyse wird vereinfacht und Verfälschungen werden verhindert.

Vorzugsweise wird die erste Karte vor der Durchführung des Floodfill-Verfahrens geglättet, insbesondere durch eine Gauss-Filterung. Artefakte der Bilderfassung und Verarbeitung können so auf einfache Weise eliminiert werden. Die Glättung verhindert eine künstliche Bildung von "Inseln" nur aufgrund von Artefakten.

Die Glättung muss nicht zwingend vorgenommen werden, insbesondere dann nicht, wenn das der ersten Karte zugrundeliegende Raster eine gewisse Rasterweite aufweist, so dass kleinräumige Fluktuationen bereits bei der Erstellung der ersten Karte weitgehend ausgemittelt werden.

Bevorzugt wird das Floodfill-Verfahren für alle Positionen des Ausgangsbereichs durchgeführt, so dass mehrere zusammenhängende Bereiche erzeugbar sind, und ein flächenmässig grösster Bereich wird als Ausdehnung der freien Warteschlange ausgewählt. Dadurch wird sichergestellt, dass die freie Warteschlange vollständig erfasst wird, unabhängig davon, wo genau das Ziel der Wartenden der Warteschlange liegt. Zur Steigerung der Prozesseffizienz können Positionen des Ausgangsbereichs, die von einem bereits erfolgten Floodfill-Verfahren erreicht wurden, als Ausgangspunkte für weitere Floodfill-Verfahren ausgelassen werden, denn diese können keine neuen oder anderen Bereiche liefern.

Mit Vorteil wird der zusammenhängende Bereich durch mindestens eine morphologische Operation weiter verarbeitet, insbesondere durch einen oder mehrere der folgenden Prozesse:
- Füllen von isolierten Löchern in einem zusammenhängenden Bereich;
- Dilatation;
- Closing.

Dadurch ergibt sich als Ausdehnung der freien Warteschlange ein Bereich, dessen Eigenschaften weitgehend denjenigen von üblicherweise vorkommenden Bereichen von freien Warteschlangen entsprechen, denn letztere weisen in der Regel weder isolierte Löcher noch durchgehende Trennstellen auf. Es ist somit davon auszugehen, dass solche Merkmale üblicherweise Artefakte der Datenverarbeitung darstellen. Durch die erwähnten Operationen werden die Artefakte beseitigt. Jede der Operationen kann auch mehrfach durchgeführt werden, beispielsweise können die drei Schritte in der oben genannten Abfolge und schliesslich nochmals ein Füllschritt für das Füllen isolierter Löcher ausgeführt werden.

Bevorzugt wird im Rahmen des Verfahrens eine Kennzahl für eine Bewegung in der freien Warteschlange generiert. Wenn diese Kennzahl eine geringe Bewegung anzeigt, wird der ermittelte zusammenhängende Bereich mit einem zu einem früheren Zeitpunkt ermittelten zusammenhängenden Bereich kombiniert. Bei geringer Bewegung sind Lücken in der ersten Karte wahrscheinlich, der Floodfill-Prozess würde entsprechend nur ein Teilstück der Warteschlange liefern. Durch die Kombination mit dem früher ermittelten Bereich wird sichergestellt, dass auch in solchen Fällen die gesamte Ausdehnung erfasst wird.

Sobald eine ermittelte Warteschlange vorliegt, kann die Kennzahl im Rahmen der Erstellung der ersten Karte beispielsweise wie folgt ermittelt werden:
1. Pro Person und pro Feld, welches von dieser Person bedeckt wird, wird ein erster Zähler inkrementiert, sofern sich die Person in der Warteschlange befindet.
2. Pro Person und pro Feld, welches von dieser Person bedeckt wird, wird ein zweiter Zähler inkrementiert, sofern die Person nicht bereits einmal ihre aktuelle Position innehatte, vorausgesetzt, die Person befindet sich in der Warteschlange.

Die Schritte 1 und 2 werden über eine Periode hinweg aufsummiert. Am Ende der Periode wird dann die Kennzahl gebildet als Verhältnis zwischen zweitem Zähler und erstem Zähler. Ein hoher Wert deutet somit auf eine starke Bewegung innerhalb der Warteschlange hin.

Andere Verfahren zur Ermittlung der Kennzahl sind möglich. Die Kombination mit früher ermittelten Bereichen kann zudem auf anderen Kriterien basieren und z. B. bei einer sprunghaften Verkleinerung der Fläche des zusammenhängenden Bereichs erfolgen. (Hier ist allerdings zu berücksichtigen, dass eine solche sprunghafte Verkleinerung in der Praxis stattfinden kann, z. B. dann wenn ein neuer Ausgangsbereich geschaffen wird, z. B. durch Öffnung eines zusätzlichen Schalters oder Durchlasses.)

Ein nicht beanspruchtes Verfahren zur Analyse der Verteilung von Objekten in einer freien Warteschlange, ausgehend von Positionsinformationen, umfasst folgende Schritte:
a) Unterteilen eines Überwachungsbereichs, welcher die freie Warteschlange umfasst, in eine Mehrzahl von Positionen;
b) ausgehend von den Positionsinformationen Erkennen von Objekten, welche der freien Warteschlange zugeordnet sind;
c) Verfolgen der erkannten Objekte;
d) zumindest für einen Teil der erkannten Objekte Nachführen einer aktuellen Wartezeit in der freien Warteschlange;
e) zumindest zu einem Teil der Positionen des Überwachungsbereichs Zuordnen der aktuellen Wartezeit eines oder mehrerer der erkannten Objekte, die sich an den entsprechenden Positionen befinden; und
f) Einteilung der Positionen mit zugeordneten Wartezeiten in mehrere Klassen, wobei jede der Klassen einem zusammenhängenden Wartezeitbereich entspricht.

Das nicht beanspruchte Verfahren ist insbesondere zur Analyse von Warteschlangen geeignet, die durch Personen gebildet werden. Grundsätzlich ist es aber auch für freie Ansammlungen anderer "wartender" Objekte geeignet, z. B. von Tieren vor einem Einlass, von Artikeln in einem Trichterbereich vor einem Durchlass usw. Das nicht beanspruchte Verfahren ist ebenfalls zur Analyse von Warteschlangen geeignet, deren Verlauf durch ein Lining ganz oder teilweise vorgegeben ist, bei welchen aber die Anordnung des Linings nicht fest ist, sondern im Betrieb umgestellt wird. Mit Hilfe des nicht beanspruchten Verfahrens können derartige Warteschlangen ohne weiteres berücksichtigt werden, ohne dass Änderungen am Lining explizit in die Auswertung einfliessen müssten. Weil die Anordnung des Linings nicht bekannt zu sein braucht und der gesamte mögliche Wartebereich überwacht wird, können auch derartige Warteschlangen mit variablem Lining als "freie Warteschlangen" im Sinn der Erfindung betrachtet und behandelt werden.

Bei den Positionsinformationen handelt es sich insbesondere um Bildinformationen. In der Regel werden die Bildinformationen in gerasterter Form vorliegen, d. h. als eine gewisse Anzahl von Bildpunkten (Pixeln) mit einem gewissen Helligkeits- und/oder Farbwert. Der hier verwendete Begriff "Position" bezieht sich stets auf einen gewissen Bereich des physischen Raums, also einen Flächenbereich bei der zweidimensionalen Analyse einer Warteschlange bzw. einen Raumbereich bei der dreidimensionalen Analyse einer Warteschlange. Der Bereich kann insbesondere einer gewissen Zahl von Bildpunkten der Bildinformationen entsprechen (z. B. je 1 Pixel, 2x2 Pixel usw.), wobei nicht alle Bereiche gleich gross sein müssen. Entsprechend "befindet" sich ein Objekt an einer bestimmten Position, wenn das Objekt den Flächenbereich bedeckt, bzw. den Raumbereich ausfüllt. Ein Objekt kann sich somit grundsätzlich gleichzeitig an mehreren (benachbarten) Positionen befinden.

Die Wartezeit muss nicht zwingend für alle Objekte der freien Warteschlange nachgeführt werden. Es ist namentlich möglich, zwischen "sicher erkannten" (validierten) Objekten und "unsicheren" Objekten im Überwachungsbereich zu unterscheiden, wobei bei letzteren noch nicht (oder nicht mehr) feststeht, ob sie tatsächlich der Warteschlange angehören.

Beim nicht beanspruchten Verfahren wird also ein Binning der Wartezeiten vorgenommen, d. h. Positionen mit ähnlicher Wartezeit werden gruppiert. Dadurch wird für die freie Warteschlange eine "Karte" erstellt, welche einzelne Sub-Regionen mosaikartig aufsteigend entlang der Warteschlangenrichtung repräsentiert. Damit wird eine robuste Nachbarschaftsdefinition zu jedem beliebigen Bereich innerhalb der freien Warteschlange möglich. Das Binning schafft somit eine stabile Grundlage für die weitergehende Analyse der freien Warteschlange.

Bevorzugt werden Wartezeiten mehrerer während eines Überwachungszeitraums an einer bestimmten Position befindlicher Personen vor der Einteilung der Positionen in Klassen gemittelt. Dadurch ergeben sich stabile und homogene Ergebnisse. Bei der Mittelung kann es sich z. B. um die Bildung eines Mittelwerts (arithmetisches, geometrisches Mittel usw.) oder eines Medianwerts handeln. Die Wartezeiten können gewichtet in die Mittelung eingehen, z. B. indem zeitlich nähere Werte höher gewichtet werden als frühere, zeitlich entferntere Werte.

Für die Mittelung können die Wartezeiten derjenigen Personen berücksichtigt werden, welche sich während einer vorgebbaren Zeitspanne vor einem Auswertezeitpunkt an der bestimmten Position befunden haben.

Alternativ oder zusätzlich können die Wartezeiten einer vorgebbaren Anzahl von Personen für die Mittelung berücksichtigt werden, welche sich zuletzt an der bestimmten Position befunden haben. Besonders bevorzugt werden die Kriterien kombiniert, d. h. es fliessen die Wartezeiten einer vorgegebenen maximalen Anzahl von Personen ein, wobei aber nur Personen berücksichtigt werden, die sich nicht länger als vor einer vorgegebenen maximalen Zeitspanne an der entsprechenden Position befunden haben. So wird sichergestellt, dass die gemittelten Wartezeiten den aktuellen Stand repräsentieren.

Bevorzugt werden Positionen einer nicht-leeren Klasse, welcher die kleinste Wartezeit zugeordnet ist, als Anfang der freien Warteschlange definiert. Auf diese Weise kann aufgrund der durch das Binning ermittelten Nachbarschaftsinformationen einer die Warteschlange betretenden Person eine repräsentative Wartezeit zugewiesen werden.

Mit Vorteil umfasst das nicht beanspruchte Verfahren folgende zusätzlichen Schritte:
g) Zuordnen neu erkannter Objekte einer ersten Objektgruppe;
h) für jedes der Objekte der ersten Objektgruppe Speichern einer Folge von Positionen des Objekts mit zugeordneten Wartezeiten;
i) für alle Objekte der ersten Objektgruppe periodisch prüfen, ob diese ein Validitätskriterium erfüllen;
j) Zuordnen aller geprüften Objekte, die das Validitätskriterium erfüllen zu einer zweiten Objektgruppe und Zufügen zumindest eines Teils der für diese Objekte gespeicherten Folge zu den in Schritt e) den Positionen zugeordneten Wartezeiten,
wobei eine Zuordnung der aktuellen Wartezeit gemäss dem oben genannten Schritt e) nur für die Objekte in der zweiten Objektgruppe erfolgt.

Dadurch wird einerseits sichergestellt, dass Informationen neu identifizierter Objekte im Überwachungsbereich nur dann in die Analyse einfliessen, wenn es sich herausgestellt hat, dass die Objekte (mit einer gewissen Wahrscheinlichkeit) zur Warteschlange gehören. Andererseits gehen die für diese Objekte bereits vor dieser Feststellung gesammelten Daten nicht verloren, sondern sie werden (retrospektiv) nach erfolgter Validierung den Daten der weiteren validierten Objekte hinzugefügt. Die Hinzufügung kann auf einen Teil der Daten, insbesondere Daten aus einem vorgegebenen zeitlichen Intervall vor dem Hinzufügungszeitpunkt, beschränkt sein.

Das eingangs beschriebene erfindungsgemässe Verfahren zur Bestimmung der räumlichen Ausdehnung einer freien Warteschlange lässt sich insbesondere im Rahmen des vorstehend beschriebenen, nicht beanspruchten Verfahrens zur Analyse der Verteilung von Objekten in einer freien Warteschlange basierend auf klassierten Wartezeiten einsetzen, namentlich als erster Schritt, bevor die Analyse vorgenommen wird. Es ist aber auch unabhängig davon bzw. in Kombination mit anderen, nicht beanspruchten Verfahren zur Analyse der Objekte in der Warteschlange nutzbar.

### Kurze Beschreibung der Zeichnungen

Die zur Erläuterung des Ausführungsbeispiels verwendeten Zeichnungen zeigen:
- Fig. 1: Eine symbolische Darstellung einer Verteilung von Personen in einem Überwachungsbereich;
- Fig. 2: ein Datenflussplan des Verfahrens zur Erfassung einer freien Warteschlange;
- Fig. 3: eine Geschwindigkeitskarte, in welcher die durchschnittlichen vektoriellen Geschwindigkeiten der einzelnen Personen dargestellt sind;
- Fig. 4: eine Belegungskarte, in welcher Positionen verzeichnet sind, die von Personen eingenommen werden, deren Geschwindigkeit einen gewissen Schwellenwert nicht übersteigen;
- Fig. 5: eine Geschwindigkeitskarte, in welcher die durchschnittlichen vektoriellen Geschwindigkeiten an den einzelnen Positionen verzeichnet sind;
- Fig. 6: die Belegungskarte nach Durchführung eines Floodfill-Prozesses;
- Fig. 7: eine symbolische Darstellung einer Verteilung von Personen in einem Überwachungsbereich mit zugeordneten Wartezeiten; und
- Fig. 8A, B: eine Wartezeitkarte mit einer Aufteilung eines Ausdehnungsgebiets der freien Warteschlange in Wartezeitklassen.

Grundsätzlich sind in den Figuren gleiche Teile mit gleichen Bezugszeichen versehen.

### Wege zur Ausführung der Erfindung

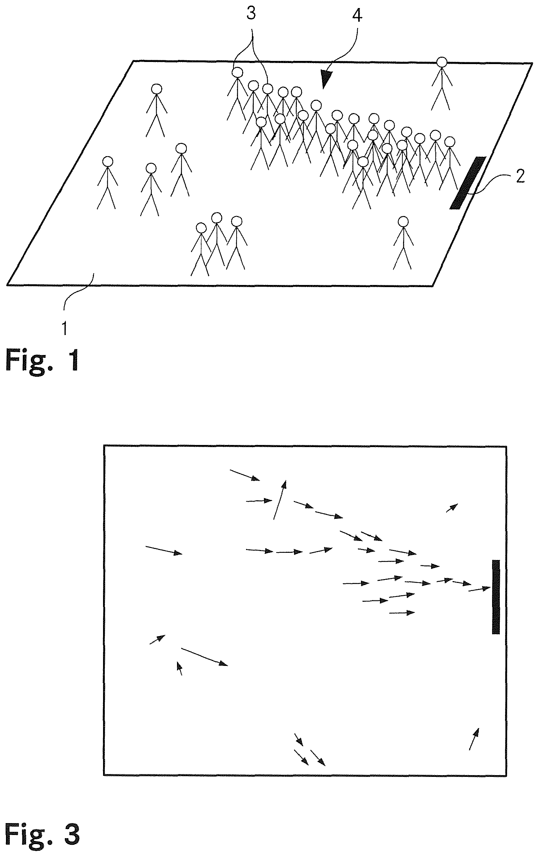

Anhand der Figuren 1 - 8 wird ein erfindungsgemässes Verfahren erläutert. Die Figur 1 ist eine symbolische Darstellung einer Verteilung von Personen in einem Überwachungsbereich. Der Überwachungsbereich 1 hat im dargestellten vereinfachten Beispiel eine rechteckige Form und weist einen Ausgangsbereich 2, z. B. einen Schalter, auf, der an einem Rand des Überwachungsbereichs 1 angeordnet ist. Im Überwachungsbereich 1 befinden sich eine Reihe von Personen 3, darunter solche, die vor dem Ausgangsbereich 2 anstehen und andere, die sich aus anderen Gründen im Überwachungsbereich 1 aufhalten.

Die anstehenden Personen bilden eine Warteschlange 4. Da keine Markierungen oder Begrenzungen vorhanden sind, welche die Form der Warteschlange 4 festlegen würden, hat sich ihre Form in grundsätzlich unvorhersehbarer Weise gebildet. Die Mitglieder der Warteschlange 4 befinden sich jedoch in einem im Wesentlichen zusammenhängenden Gebiet, und die Endposition der Schlange, d. h. das Ziel der Wartenden, ist bekannt (nämlich der Ausgangsbereich 2). Eine derartige Warteschlange wird, wie bereits weiter oben erläutert, als "freie Warteschlange" bezeichnet.

Das erfindungsgemässe Verfahren dient nun zur automatischen Erfassung und Analyse der freien Warteschlange auf der Basis von Positionsinformationen. Es besteht aus zwei Hauptelementen, nämlich:
1. der Bestimmung der räumlichen Ausdehnung der freien Warteschlange und
2. der Analyse der Verteilung von Objekten in der freien Warteschlange.

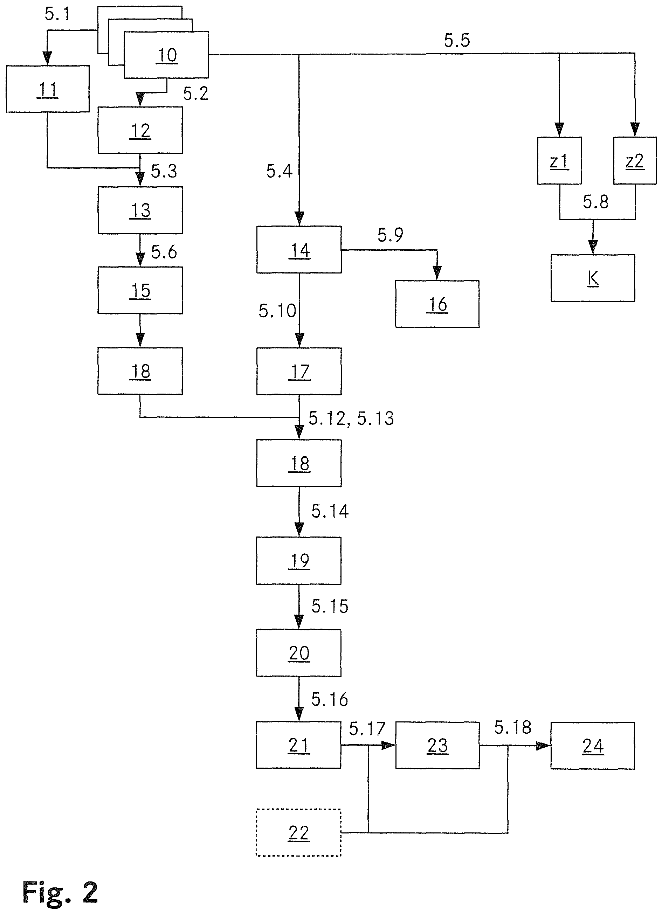

Beide Hauptelemente umfassen mehrere Teilfunktionen, welche gegenseitig voneinander abhängen. Ein vereinfachter Datenflussplan zum ersten Hauptelement ist in der Figur 2 dargestellt.

Die in der Figur 1 dargestellte Situation wird zunächst durch einen Bildsensor erfasst, z. B. durch eine Kamera oder mehrere oberhalb des Überwachungsbereichs angeordnete Kameras, durch Ultraschall- oder Infrarotsensoren oder andere Sensoren, welche Personenpositionen erfassen können. Die Bilderfassung erfolgt periodisch, es werden laufend neue Frames 10 erzeugt, welche jeweils die aktuelle Situation abbilden. Die den Frames entsprechenden Bildinformationen werden im Bildsensor vorverarbeitet und anschliessend einer Verarbeitungseinrichtung zugeführt. Die Vorverarbeitung oder die erste Verarbeitung in der Verarbeitungseinrichtung umfassen in an sich bekannter Weise den Schritt der Erkennung einzelner Objekte (Personen) und die Zuordnung einer eindeutigen Kennung, so dass die Personen in der Folge individualisiert verfolgt werden können.

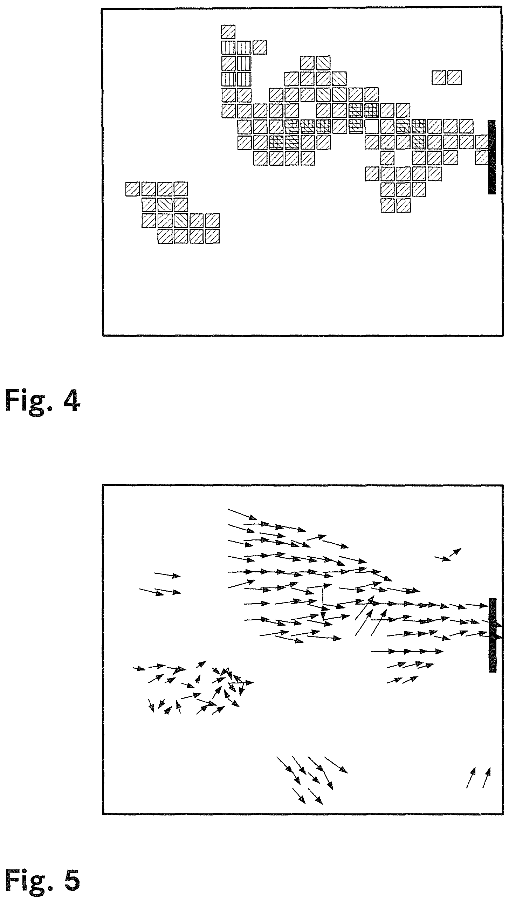

Für jeden Frame werden nun folgende Schritte durchgeführt:
1. In regelmässigen Zeitabständen, z. B. jede halbe Sekunde, entsprechend jeweils einem "Step": Speichere die Positionen aller Personen im Überwachungsbereich in einer Datenstruktur 11, welche alle vergangenen n Positionen pro Person beinhaltet (Schritt 5.1).
2. Mithilfe der Datenstruktur wird anschliessend geprüft, wie viele Steps (= 10 Frames) eine Person benötigte, um eine bestimmte Distanz zurückzulegen. Dadurch wird die durchschnittliche Geschwindigkeit über die letzten Frames ermittelt. Ist diese höher als eine gewisse Schwelle, wird die Person als zu schnell für eine Warteschlange eingestuft (z. B. jemand, der nah an der Warteschlange vorbei läuft oder quer durch die Warteschlange hindurch). Das Set 12 der verbleibenden Personen wird weiter verarbeitet (Schritt 5.2). Wenn die Person zu schnell unterwegs ist, wird sie für die nachfolgenden Schritte nicht berücksichtigt.
3. Als nächstes werden die Richtung und die Geschwindigkeit aller Personen bestimmt, die bereits im vorherigen Step vorhanden waren. Es ergibt sich also für jede Person ein Richtungsvektor (Schritt 5.3, Daten 13). Dies ist schematisch in der Figur 3 dargestellt.
4. In einer ersten Karte 14, die den Überwachungsbereich in herunterskalierter Grösse repräsentiert, werden alle Felder inkrementiert, die von jeder nicht zu schnellen Person bedeckt werden (Schritt 5.4). Die erste Karte ist schematisch in der Figur 4 dargestellt. Die unterschiedlichen Schraffuren repräsentieren unterschiedliche Werte der einzelnen Felder.
5. Wenn bereits eine detektierte Warteschlange vorliegt, werden wie folgt Indizien für die Beurteilung der Bewegung innerhalb der Warteschlange generiert (Schritt 5.5):
   5.1 Ein erster Zähler z1 wird pro Person und pro Feld, welches von dieser Person bedeckt wird, inkrementiert, vorausgesetzt, die Person befindet sich in der Warteschlange.
   5.2. Ein zweiter Zähler z2 wird pro Person und pro Feld, welches von dieser Person bedeckt wird, inkrementiert, sofern die Person nicht bereits einmal ihre aktuelle Position innehatte, vorausgesetzt, die Person befindet sich in der Warteschlange.

   Die Zählerstände werden wie weiter unten erläutert zu einem späteren Zeitpunkt genutzt.
6. In einer zweiten Karte 15, welche dieselbe Grösse wie die erste Karte aufweist, werden die letzten n Personen-Richtungsvektoren jedes Felds gespeichert (Schritt 5.6). Es werden alle Richtungsvektoren derjenigen Personen gespeichert, die bereits beim Aufbau der ersten Karte berücksichtigt wurden und zudem zwischen dem letzten und dem aktuellen Frame nicht still standen. Felder dieser Map, über die schon länger keine Person mehr ging, werden nach einer festgelegten Zeit zurückgesetzt, da die Gültigkeit der entsprechenden Richtungsvektoren ungenügend wäre. Eine entsprechende Karte ist in der Figur 5 dargestellt.
7. Die Schritte 4 und 5 werden für alle Punkte auf dem aktuellen Richtungsvektor jeder Person, die bereits beim Aufbau der ersten Karte berücksichtigt wurde, wiederholt. Das heisst, die Schritte werden für diejenigen Felder der ersten Karte wiederholt, welche vom Richtungsvektor berührt werden, also welche zwischen dem Beginn und dem Ende des Richtungsvektors liegen. So werden alle Felder berücksichtigt, welche die Person zwischen dem letzten und dem aktuellen Frame betreten bzw. verdeckt hat, dadurch wird die Karte auf den kompletten Trajektorien aktualisiert.

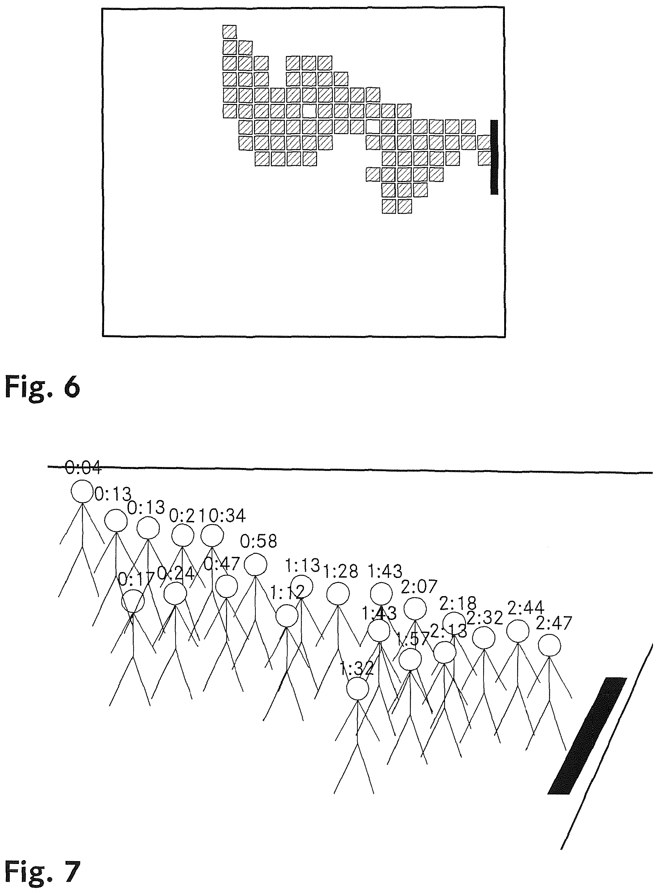

Periodisch in vorgegebenen Zeitabständen wird ein zusammenhängender Bereich generiert, der die Abbildung der Warteschlange im Überwachungsbereich maskiert (ROI, region of interest). Dazu werden folgende Schritte ausgeführt:
8. Aus den Zählerwerten z1 und z2 wird eine Kennzahl zur Beurteilung der Stärke an Bewegung innerhalb der vergangenen Periode in der Warteschlange errechnet. Die Kennzahl K ist das Verhältnis z2/z1 (Schritt 5.8).
9. Es wird eine Stopp-Maske 16 generiert, welche Bereiche maskiert, die mit grosser Sicherheit nicht zur Warteschlange gehören (keine Aktivität in der gesamten Periode, alle 0-Felder in der ersten Karte, Schritt 5.9).
10. Durch eine Gauss-Filterung der ersten Karte wird eine temporäre "Appearance Map" 17 generiert (Schritt 5.10). Sie repräsentiert die Aktivität oder Auftretens-Dichte von Personen in der vergangenen Periode.
11. Nun werden aus der zweiten Karte die durchschnittlichen Richtungsvektoren pro Feld während der vergangenen Periode ermittelt und daraus Trajektorien 18 erstellt, welche in der vergangenen Periode oft vorkamen (Schritt 5.11). Die Trajektorien 18 entsprechen den durchschnittlichen Richtungsvektoren. Zur Gewinnung dieses Durchschnitts wird der Median aller X- bzw. aller Y-Koordinaten der auf einem bestimmten Feld der zweiten Karte gespeicherten Richtungsvektoren ermittelt. Daraus ergibt sich eine weitere Karte, welche für jedes Feld angibt, wohin der durchschnittliche Richtungsvektor auf diesem Feld zeigt. Die Trajektorie ergibt sich durch das Aneinanderketten mehrerer solcher Richtungsvektoren.
12. Die Appearance Map 17 wird zusammen mit den Erkenntnissen aus den Trajektorien 18 (erneut) gefiltert. Dazu wird entlang der Trajektorie jedes Feldes, welches zu einer der oft vorkommenden Trajektorien gehört, eine vorgegebene Anzahl von Werten aus der Appearance Map gesammelt und gemittelt (Schritt 5.12). Die ermittelten Trajektorien werden überall dort verwendet, wo ein Mindestwert auf der im Schritt 10 ermittelten temporären Appearance Map vorliegt. Für jedes Feld, welches diesen Mindestwert überschreitet, wird die durchschnittliche Trajektorie dieses Feldes verfolgt. Entlang dieser Trajektorie, d. h. für alle Felder, welche auf der Trajektorie liegen, werden die korrespondierenden maximal n Werte aus der Appearance Map gespeichert. Aus all diesen Werten wird dann wiederum der Median als Durchschnittswert ermittelt. Diese Durchschnittswerte werden in der gefilterten Appearance Map gespeichert.
13. Zur Erzeugung der definitiven Appearance Map 18 erhält nun jedes Feld einen Wert, welcher dem Maximum aus dem entsprechenden Wert in der vorhandenen Appearance Map und dem soeben bestimmten gemittelten Wert im entsprechenden Feld entspricht (Schritt 5.13). Auf diese Weise können insbesondere Löcher in der Appearance-Map geschlossen werden, und der Hauptpfad der Warteschlange wird besonders gewichtet.
14. Zur Ermittlung aller möglichen ROIs 19, die den definierten Ausgangsbereich 2 schneiden, wird ein Flood-Fill-Prozess durchgeführt, welcher nacheinander alle Punkte des Ausgangsbereichs als Ausgangspunkt verwendet, sofern der entsprechende Punkt nicht bereits in einem vorangegangenen Flood-Fill-Schritt erreicht wurde. Die Validitätsfunktion des Flood-Fills prüft die jeweiligen Nachbarfelder auf einen minimalen Wert in der definitiven Appearance Map und ein Nichtvorhandensein in der Stopp-Maske (Schritt 5.14).
15. Es wird nun die weiter zu verwendende ROI 20 bestimmt: Wenn im vorangegangenen Schritt 5.14 mindestens eine ROI 19 ermittelt wurde, so wird die flächenmässig grösste ROI verwendet. Ansonsten wird eine Minimal-ROI verwendet, die den Bereich unmittelbar vor dem definierten Ausgangsbereich 2 umfasst (Schritt 5.15).
16. Nun werden die folgenden morphologischen Operationen auf der ROI 20 durchgeführt, um eine geschlossene, leicht ausgedehnte, lückenfreie ROI 21 zu erhalten (Schritt 5.16):
   a. Binary Fill Holes
   b. Dilate
   c. Closing
   d. Binary Fill Holes
17. Nun wird geprüft, ob die Kennzahl K unter einem bestimmten unteren Grenzwert liegt, was eine sehr geringe Bewegung innerhalb der Warteschlange indizieren würde. Da in diesem Fall Lücken in der Appearance-Map wahrscheinlich sind und der Flood-Fill dadurch nur ein Teilstück der erwünschten ROI ermitteln würde, wird in diesem Fall die bisherige ROI 22 aus der vergangenen Periode mit der neu generierten ROI 21 kombiniert (Schritt 5.17). Es resultiert eine neue ROI 23.
18. Wenn die Fläche, sprich die Anzahl Felder der neuen ROI, kleiner ist als diejenige der bisherigen ROI multipliziert mit einem definierten Faktor f, 0 < f < 1), indiziert dies einen unrealistischen Rückgang innerhalb einer Periode, beispielsweise durch das Stehenbleiben eines kompletten Teilbereichs der Warteschlange während der gesamten Periode. Wenn dieser Fall nicht bereits eine vorgegebene Anzahl, z. B. drei, Mal in Folge zutraf, wird die bisherige ROI 22 aus der vergangenen Periode verwendet und die neu ermittelte ROI verworfen (Schritt 5.18). Nach drei Perioden ist anzunehmen, dass der Rückgang tatsächlich erfolgt ist, z. B. weil ein neuer Ausgangsbereich eröffnet wurde, weshalb dann die neu ermittelte ROI verwendet wird). Es ergibt sich eine definitive ROI 24 wie in der Figur 6 dargestellt.
19. Schliesslich wird die erste Karte, welche jeweils die Aktivität in einer Periode repräsentiert, zurückgesetzt.

Nach der Ermittlung des Warteschlangenbereichs (ROI) lässt sich die freie Warteschlange analysieren. Dazu wird eine Karte erstellt, die die ROI abdeckt und ein Binning der durchschnittlichen Wartezeit pro Feld in der vergangenen Periode repräsentiert, also wie lange Personen im Schnitt bereits warteten, welche sich in einem bestimmten Feld befanden. Durch das Binning in Bins von beispielsweise 10 Sekunden Grösse ergibt sich eine Karte, welche Bereiche umfasst, die sich sequentiell entlang der Warteschlange anordnen. Dies ist nützlich für die Definition der Nachbarschaft innerhalb der Warteschlange und zum Festlegen des Warteschlangen-Anfangs.

Für jeden Frame werden folgende Schritte durchgeführt:
1. In einer Karte mit derselben Auflösung wie die oben erwähnte erste Karte werden pro Feld, welches der zu analysierenden Warteschlange zugeordnet ist, die Wartezeiten der letzten n Personen gespeichert, die sich auf dem Feld befanden (bzw. dieses bedeckten).
2. Neu in die Analyse einbezogene Personen oder solche, denen noch keine Wartezeit zugeordnet ist, die also nicht in der soeben erwähnten Karte verzeichnet sind, haben zunächst den Status "unvalidiert". Für alle unvalidierten Personen wird ein temporärer Pfad verwaltet. Dieser speichert Positionen der Person zusammen mit den Wartezeiten, welche die Person an der jeweiligen Position hat. Zudem wird auch der Zeitpunkt gespeichert, an welchem die jeweilige Position zuletzt gespeichert wurde.
3. Sobald eine Person den Status "validiert" erlangt, also in der im vorletzten Schritt erwähnten Karte verzeichnet wird, werden dieser Karte an den entsprechenden Positionen alle temporär gespeicherten Wartezeiten der validierten Person hinzugefügt, vorausgesetzt der Zeitpunkt der Speicherung der Position liegt nicht weiter zurück als ein vorgegebener zeitlicher Abstand (womit die Track-Information ungenügend aktuell wäre).
4 Falls eine Person zwar validiert wird, jedoch in ihrer Wartezeit korrigiert werden musste (siehe unten), wird der Pfad verworfen, d. h. die temporär gespeicherten Daten fliessen nicht in die Karte ein.
5. Der Pfad wird ebenfalls verworfen, wenn der Zeitpunkt des letzten Aufenthalts innerhalb des Warteschlangenbereichs weiter zurück liegt als ein vorgegebener zeitlicher Abstand.
6. Die Wartezeit von Personen, die bereits validiert sind, wird an ihrer aktuellen Position direkt der im Schritt 1 erwähnten Karte hinzugefügt. Eine temporäre Speicherung ist in diesem Fall nicht notwendig. Falls die Karte bereits einen Eintrag dieser Person an derselben Position beinhaltet, wird die bereits gespeicherte Wartezeit der Person überschrieben. Die Figur 7 zeigt eine schematische Darstellung der der Warteschlange zugeordneten Personen mit den errechneten Wartezeiten.

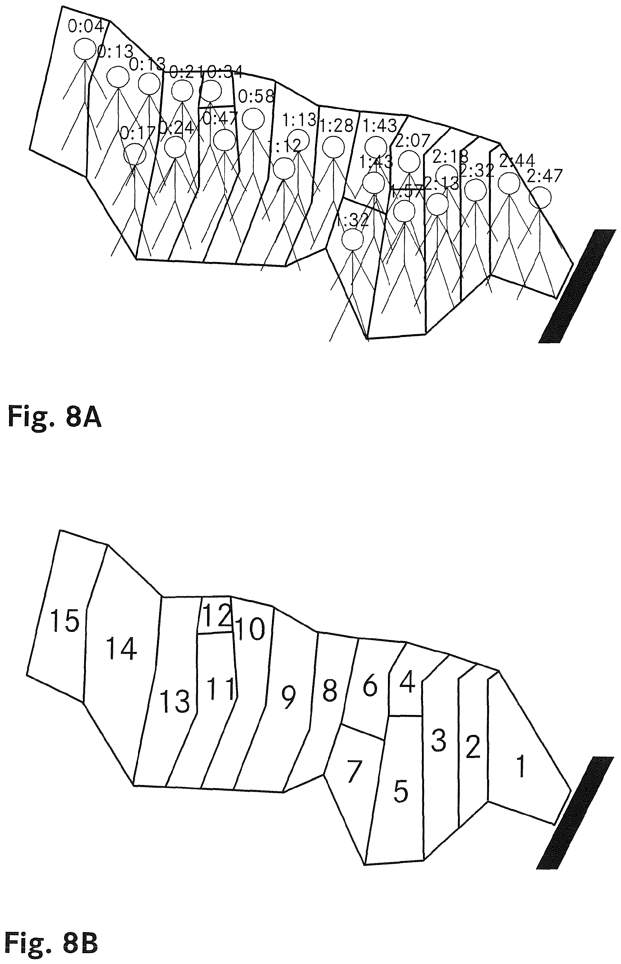

Periodisch in vorgegebenen Zeitabständen werden ferner folgende Schritte durchgeführt:
7. Aus der Karte aus Schritt 1 wird pro Periode eine klassierte Karte generiert. Diese repräsentiert die durchschnittliche Wartezeit an einer bestimmten Position als Bin. Ein Bin umfasst dabei 10 Sekunden. Jeder Bin ist mit einer Identifikationsnummer versehen, aufsteigend vom Ende der Warteschlange bis zu deren Anfang. Die Karte ist schematisch in den Figuren 8A, B dargestellt. Da für die durchschnittliche Wartezeit nur Werte einfliessen, die von Personen stammen, die zuverlässige (gültige) vergangene Wartezeiten aufweisen, widerspiegelt diese klassierte Karte ein kontinuierlich verlaufendes, zunehmendes Wartezeitmuster vom Anfang der Warteschlange bis zum Ende (nahe des definierten Ausgangsbereichs). Diese Karte bildet eine robuste Basis zum Finden der Nachbarschaften innerhalb der Warteschlange. Personen, die sich zu einem bestimmten Zeitpunkt im selben Bin (oder in angrenzenden Bins) befinden, sind mit sehr grosser Wahrscheinlichkeit benachbart.
8. Die Identifikationsnummer desjenigen Bins, welcher der kürzesten Wartezeit entspricht,wird gespeichert. Diese Nummer wird benutzt, um den Anfang der Warteschlange zu identifizieren.

Basierend auf den erarbeiteten Daten können nun Analysen vorgenommen werden. Bei der Bestimmung der Wartezeit von Personen, die die Warteschlange neu betreten haben, wird berücksichtigt, ob sich die Person regulär der Warteschlange angeschlossen hat oder ob sie (z. B. aufgrund eines Erfassungsfehlers) direkt innerhalb der Warteschlange auftauchte. Zudem ist der Eintrittsort der Person entscheidend (regulär am Warteschlangen-Anfang oder irgendwo entlang der Warteschlange).

Für jeden Frame wird gespeichert, ob sich eine Person innerhalb eines Warteschlangenbereichs befindet oder ausserhalb. Damit kann pro Person ein IN/OUT-Zähler geführt werden. Dieser zählt jeweils k Frames hoch, sobald sich der Standort einer Person verändert hat (innerhalb/ausserhalb der Warteschlange). Wenn der IN/OUT-Zähler einen gewissen Grenzwert übersteigt, wechselt die Person ihre bisherige Zugehörigkeit zur Warteschlange. Dadurch wird eine Art Toleranzzeit umgesetzt, wie lange eine Person ihren Standort ändern darf, bevor ihre Zugehörigkeit angepasst wird. Die Anpassung der Zugehörigkeit soll beispielsweise unterbleiben, wenn eine Person nur durch die Warteschlange hindurch geht, sich also nur temporär im Bereich der Warteschlange befindet.

Für jede Person, welche erstmalig die Warteschlange betritt, wird die Bin-Identifikationsnummer des Eintrittsortes gespeichert. Zudem wird für jede Person erfasst, ob der Ort ihres erstmaligen Erscheinens bereits zu der Warteschlange gehörte oder ausserhalb lag.

Die Personen innerhalb der Warteschlange können anhand ihres Bewegungsmusters auf eine ungewöhnliche Fortbewegung (drängelnd oder zurückfallend) untersucht werden. Personen, die sich ungewöhnlich fortbewegen und somit eine andere Wartezeit erfahren werden als durchschnittliche Mitglieder der freien Warteschlange, werden als "zu korrigieren" markiert. Dazu werden folgende Schritte durchgeführt:
1. Die m nächsten Nachbarpersonen, welche sich vor der betrachteten Person befinden sowie die m nächsten Personen, welche sich hinter der zu betrachtenden Person befinden, werden bestimmt. Dazu werden die Bin-Identifikationsnummern und die Wartezeiten der weiteren Personen mit den entsprechenden Angaben der betrachteten Person verglichen.
2. Als Nächstes werden die durchschnittlichen Wartezeiten der m vorangehenden und der m folgenden Personen bestimmt.
3. Die Differenz dieser beiden Wartezeiten von der Wartezeit der betrachteten Person wird bestimmt und daraus die zeitliche Abweichung der beiden Werte gegenüber den entsprechenden Werten aus der letzten Auswertung. Die Differenzwerte werden gespeichert, sie werden in der nächsten Auswertung wieder benötigt.
4. Nun wird die durchschnittliche Wartezeit der k Personen, die sich am nächsten der betrachteten Person befinden, deren Bin-Identifikationsnummer also derjenigen der betrachteten Person am nächsten kommen, bestimmt; anschliessend die Anzahl Bins, welche zwischen dieser durchschnittlichen Wartezeit und jener der betrachteten Person liegt.
5. Falls die beiden Abweichungen aus dem Schritt 3 über einer gewissen Schwelle liegen und auch die Anzahl Bins aus dem Schritt 4 eine gewisse Schwelle überschreitet, wird für die betrachtete Person ein Zähler inkrementiert. Der Wert dieses Zählers ist ein Indiz für eine ungewöhnliche Fortbewegung, denn wenn die erwähnten Schwellen überschritten sind, scheint sich das Umfeld der betrachteten Person im Vergleich zur vorangegangenen Auswertung deutlich verändert zu haben, was darauf hinweist, dass sich die Person z. B. zu langsam oder zu schnell in der Warteschlange bewegt hat oder aus einem anderen Grund eine nicht mehr glaubwürdige Wartezeit für den Warteschlangenbereich besitzt, in dem sie sich aktuell befindet.
6. Sind die Bedingungen im Punkt 5 erfüllt, wird zudem der temporäre Pfad verworfen (siehe oben).
7. Sind die Bedingungen im Punkt 5 nicht erfüllt, wird der im Punkt 5 erwähnte Zähler auf Null zurückgesetzt.
8. Überschreitet der Zähler einen gewissen vorgegebenen Wert (z. B. 3), zeigt dies, dass die betrachtete Person mehrmals in Folge ein stark abweichendes Umfeld aufgewiesen hat. In diesem Fall wird die Person als "zu korrigieren" markiert.

Nun wird die Wartezeit von "zu korrigierenden Personen" und von Personen bestimmt, die die Warteschlange neu (erstmals) betreten haben. Bei sich erstmals in der Warteschlange befindenden Personen wird dabei berücksichtigt, ob sich die Person regulär der Warteschlange angeschlossen hat oder ob sie (z. B. aufgrund eines Erfassungsfehlers) direkt innerhalb der Warteschlange auftauchte. Zudem ist der Eintrittsort der Person entscheidend (regulär am Warteschlangen-Anfang oder irgendwo entlang der Warteschlange). Dazu werden für jede Person, welche entweder die Warteschlange neu betreten hat oder als "zu korrigieren" markiert ist, folgende Schritte durchgeführt:
1. Zunächst wird die Differenz der Bin-Identifikationsnummer ihres aktuellen Aufenthaltsortes zur maximalen Bin-Identifikationsnummer innerhalb der Warteschlange (entsprechend dem Warteschlangen-Anfang) bestimmt.
2. Ferner wird die Differenz der Bin-Identifikationsnummer des Ortes ihres ersten Warteschlangen-Eintritts zur maximalen Bin-Identifikationsnummer bestimmt.
3. Nun wird geprüft, ob sich einer der beiden Werte aus den Schritten 1 und 2 unter einer bestimmten Schwelle befindet. Diese Schwelle entspricht der Anzahl Bins, welche zum Warteschlangen-Anfang zählen sollen. Ebenfalls wird geprüft, ob die Person nicht innerhalb der Warteschlange erstmalig auftauchte.
4. Wenn beide Bedingungen aus dem Schritt 3 erfüllt sind, wird die Person als regulär in die Warteschlange eingetretene Person klassifiziert und behält ihre bisherige Wartezeit bei. Es erfolgt also keine Korrektur.
5. Wenn eine der beiden Bedingungen aus dem Schritt 3 nicht erfüllt ist, wenn sich die Person also nicht in der Nähe des Warteschlangen-Anfangs aufhält bzw. nicht dort erstmalig in die Warteschlange eintrat oder direkt innerhalb der Warteschlange auftauchte, wird dieser Person eine neue, korrigierte Wartezeit zugeordnet. Zur Ermittlung dieser korrigierten Wartezeit werden die k nächsten Personen beigezogen und je mittels Median oder arithmetischem Mittelwert deren Wartezeit gemittelt. Können keine k Personen ausfindig gemacht werden, welche sich genügend nahe der zu korrigierenden Person befinden und deren Status gleichzeitig validiert ist, wird mit der Zuordnung der korrigierten Wartezeit vorerst zugewartet. Ein neuer Versuch erfolgt im Rahmen der nächsten Auswertung.

Zusammenfassend ist festzustellen, dass die Erfindung Verfahren zur Analyse der Verteilung von Objekten in einer freien Warteschlange und zur Bestimmung der räumlichen Ausdehnung einer freien Warteschlange schafft, welche eine effiziente Analyse freier Warteschlangen ermöglichen und präzise Ergebnisse liefern.

## Patentansprüche

1. Verfahren zur Bestimmung der räumlichen Ausdehnung einer freien Warteschlange, ausgehend von Positionsinformationen, umfassend folgende Schritte:
a) Unterteilen eines Überwachungsbereichs, welcher die freie Warteschlange umfasst, in eine Mehrzahl von Positionen;
b) ausgehend von den Positionsinformationen Erkennen von Objekten, welche der freien Warteschlange zugeordnet sind;
c) Verfolgen der erkannten Objekte;
d) periodische Speicherung einer aktuellen Position zumindest eines Teils der verfolgten Objekte;
e) Bestimmen einer durchschnittlichen Geschwindigkeit zumindest eines Teils der Objekte, wobei die durchschnittliche Geschwindigkeit eines Objekts anhand mehrerer der gespeicherten Positionen des jeweiligen Objekts bestimmt wird;
**dadurch gekennzeichnet, dass** das Verfahren weiter die folgenden Schritte umfasst:
f) Erstellen einer ersten Karte, in welcher in Bezug auf die Positionen im Überwachungsbereich eine Auftretensdichte von Objekten an den entsprechenden Positionen verzeichnet ist, indem Objekte mit einer durchschnittlichen Geschwindigkeit ausserhalb eines vorgegebenen Bereichs nicht bei der Erstellung der ersten Karte berücksichtigt werden, wobei es sich bei der ersten Karte um eine Zuordnung zwischen Flächen- bzw. Raumbereichen und den Aufenthaltswahrscheinlichkeiten dort befindlicher Objekte handelt;
g) ausgehend von einem vorgegebenen Ausgangsbereich der freien Warteschlange Durchführen eines Floodfill-Verfahrens zur Erzeugung eines zusammenhängenden Bereichs, welcher der Ausdehnung der freien Warteschlange entspricht, wobei ausgehend von einem Feld in der ersten Karte die jeweils benachbarten Felder darauf getestet werden, ob sie eine gewisse Auftretensdichte aufweisen
h) wobei eine "freie Warteschlange" eine Warteschlange bezeichnet, deren Mitglieder sich in einem zusammenhängenden Gebiet befinden und deren Endposition bekannt ist, nicht jedoch die Position des Beginns der Warteschlange und die Form der Warteschlange innerhalb eines echt zweidimensionalen Gebiets.

2. Verfahren nach Anspruch 1, **gekennzeichnet durch** folgende weiteren Schritte:
a) Bestimmen eines Richtungsvektors zumindest eines Teils der Objekte, wobei der Richtungsvektor eines Objekts anhand mehrerer der gespeicherten Positionen des jeweiligen Objekts bestimmt wird;
b) Erstellen einer zweiten Karte, in welcher in Bezug auf die Positionen im Überwachungsbereich die bestimmten Richtungsvektoren der Objekte verzeichnet sind;
c) für jedes Feld der zweiten Karte Ermitteln eines durchschnittlichen Richtungsvektors;
d) anhand der ermittelten durchschnittlichen Richtungsvektoren Identifizieren häufiger Trajektorien während einer vorgegebenen vergangenen Periode;
e) für mindestens einige der identifizierten häufigen Trajektorien Ergänzen von Informationen in der ersten Karte, betreffend die Auftretensdichte von Objekten an Positionen, die den Trajektorien zugehören.

3. Verfahren nach einem der Ansprüche 1 bis 2, **dadurch gekennzeichnet, dass** ausgehend von der ersten Karte eine Stopp-Maske erzeugt wird, welche Positionen ohne Aktivität umfasst, und dass die Stopp-Maske für eine Validitätsprüfung des Floodfill-Verfahrens herangezogen wird.

4. Verfahren nach einem der Ansprüche 1 bis 3, **dadurch gekennzeichnet, dass** die erste Karte vor der Durchführung des Floodfill-Verfahrens geglättet wird, insbesondere durch eine Gauss-Filterung.

5. Verfahren nach einem der Ansprüche 1 bis 4, **dadurch gekennzeichnet, dass** das Floodfill-Verfahren für alle Positionen des Ausgangsbereichs durchgeführt wird, so dass mehrere zusammenhängende Bereiche erzeugbar sind, und dass ein flächenmässig grösster Bereich als Ausdehnung der freien Warteschlange ausgewählt wird.

6. Verfahren nach einem der Ansprüche 1 bis 5, **dadurch gekennzeichnet, dass** der zusammenhängende Bereich durch mindestens eine morphologische Operation weiter verarbeitet wird, insbesondere durch einen oder mehrere der folgenden Prozesse:
- Füllen von isolierten Löchern in einem zusammenhängenden Bereich;
- Dilatation;
- Closing.

7. Verfahren nach einem der Ansprüche 1 bis 6, **dadurch gekennzeichnet, dass** eine Kennzahl für eine Bewegung in der freien Warteschlange generiert wird, wobei der ermittelte zusammenhängende Bereich mit einem zu einem früheren Zeitpunkt ermittelten zusammenhängenden Bereich kombiniert wird, wenn die Kennzahl eine geringe Bewegung anzeigt.

## Claims

1. Method for determining the spatial extent of a free queue, proceeding from position information, comprising the following steps:
a) subdividing a monitoring region comprising the free queue into a plurality of positions;
b) proceeding from the position information, identifying objects assigned to the free queue;
c) tracking the identified objects;
d) periodically storing a current position of at least a portion of the tracked objects;
e) determining an average speed of at least a portion of the objects, wherein the average speed of an object is determined on the basis of a plurality of the stored positions of the respective object;
**characterized in that** the method comprises further the following steps:
f) creating a first map, which records, in relation to the positions in the monitoring region, an appearance density of objects at the corresponding positions, objects having an average speed outside a predefined range not being taken into account when creating the first map, wherein the first map is an assignment between area or spatial regions and the presence probabilities of objects situated there;
g) proceeding from a predefined exit region of the free queue, carrying out a flood fill method for generating a continuous region corresponding to the extent of the free queue, wherein proceeding from a field in the first map, the respectively adjacent fields are tested to establish whether they have a certain appearance density
h) wherein "free queue" refers to a queue whose members are situated in a substantially continuous zone and whose end position is known, but not the position of the beginning of the queue and the shape of the queue within a genuinely two-dimensional zone.

2. Method according to Claim 1, **characterized by** the following further steps:
a) determining a direction vector of at least a portion of the objects, wherein the direction vector of an object is determined on the basis of a plurality of the stored positions of the respective objects;
b) creating a second map, which records the determined direction vectors of the objects in relation to the positions in the monitoring region;
c) for each field of the second map, ascertaining an average direction vector;
d) on the basis of the ascertained average direction vectors, identifying frequent trajectories during a predefined past period;
e) for at least some of the identified frequent trajectories, supplementing information in the first map, concerning the appearance density of objects at positions which are associated with the trajectories.

3. Method according to either of Claims 1 and 2, **characterized in that** a stop mask comprising positions without activity is generated proceeding from the first map, and **in that** the stop mask is used for the validity check in the flood fill method.

4. Method according to any of Claims 1 to 3, **characterized in that** the first map is smoothed before the flood fill method is carried out, in particular by Gaussian filtering.

5. Method according to any of Claims 1 to 4, **characterized in that** the flood fill method is carried out for all positions of the exit region, such that a plurality of continuous regions can be generated, and **in that** a region having the largest area is selected as the extent of the free queue.

6. Method according to any of Claims 1 to 5, **characterized in that** the continuous region is processed further by at least one morphological operation, in particular by one or a plurality of the following processes:
- filling isolated holes in a continuous region;
- dilatation;
- closing.

7. Method according to any of Claims 1 to 6, **characterized in that** a characteristic figure is generated for a movement in the free queue, wherein the continuous region ascertained is combined with a continuous region ascertained at an earlier point in time if the characteristic figure indicates a small movement.

## Revendications

1. Procédé pour déterminer l'étendue spatiale d'une file d'attente libre à partir d'informations de position, comprenant les étapes suivantes:
a) diviser une zone de surveillance comprenant la file d'attente libre en une pluralité de positions,
b) à partir des informations de position, identifier des objets associés à la file d'attente libre;
c) suivre les objets identifiés;
d) stocker périodiquement une position actuelle d'au moins une partie des objets suivies;
e) déterminer une vitesse moyenne d'au moins une partie des objets, la vitesse moyenne d'un objet étant déterminée sur la base de plusieurs des positions stockées de l'objet respective;
**caractérisé par** les étapes supplémentaires suivantes
f) établir une première carte dans laquelle une densité d'occurrence de objets aux positions correspondantes est enregistrée par rapport aux positions dans la zone de surveillance, en ce que les objets dont la vitesse moyenne se situe en dehors d'une plage prédéterminée ne sont pas prises en compte lors de l'établissement de la première carte, la première carte étant une association entre des zones de surface ou des zones spatiales et la probabilité que des objets s'y trouvent
g) à partir d'une zone de sortie prédéterminée de la file d'attente libre, exécuter un processus de remplissage complet pour créer une zone contiguë correspondant à l'étendue de la file d'attente libre, les champs adjacents étant testés à partir d'un champ de la première carte pour déterminer s'ils présentent une certaine densité d'occurrence.
h) dans lequel une «file d'attente libre» désigne une file dont les membres se trouvent dans une zone contiguë et dont la position finale est connue, mais ni la position du début de la file d'attente ni la forme de la file d'attente à l'intérieur d'une zone véritablement bidimensionnelle.

2. Procédé selon la revendication 1, **caractérisé par** les étapes supplémentaires suivantes:
a) déterminer un vecteur de direction d'au moins une partie des objets, le vecteur de direction d'un objet étant déterminé sur la base de plusieurs des positions stockées de l'objet respective;
b) établir une deuxième carte dans laquelle sont enregistrés les vecteurs de direction déterminés des objets par rapport aux positions dans la zone de surveillance;
c) déterminer un vecteur de direction moyen pour chaque champ de la deuxième carte;
d) sur la base des vecteurs de direction moyens obtenus, identifier des trajectoires fréquentes au cours d'une période passée prédéfinie;
e) pour au moins certaines des trajectoires fréquentes identifiées, compléter les informations de la première carte concernant la densité d'occurrence de objets à des positions associées aux trajectoires.

3. Procédé selon l'une des revendications 1 à 2, **caractérisé en ce qu'**un masque d'arrêt qui comprend des positions sans activité, est généré à partir de la première carte et **en ce que** le masque d'arrêt est utilisé pour une vérification de validité du procédé de remplissage complet.

4. Procédé selon l'une des revendications 1 à 3, **caractérisé en ce que** la première carte est lissée avant d'exécuter le procédé de remplissage complet, notamment par un filtrage de Gauss.

5. Procédé selon l'une des revendications 1 à 4, **caractérisé en ce que** le procédé de remplissage complet est exécuté pour toutes les positions de la zone de départ, de sorte que plusieurs zones contiguës peuvent être générées, et **en ce que** la plus grande zone de surface est choisie comme étant l'étendue de la file d'attente libre.

6. Procédé selon l'une des revendications 1 à 5, **caractérisé en ce que** la zone contiguë est soumise à un traitement supplémentaire par au moins une opération morphologique, notamment par un ou plusieurs des processus suivants:
- remplissage de trous isolés dans une zone contiguë;
- dilatation;
- fermeture.

7. Procédé selon l'une des revendications 1 à 6, **caractérisé en ce qu'**un code est généré pour un mouvement dans la file d'attente libre, la zone contiguë obtenue étant combinée avec une zone contiguë obtenue à un moment antérieur lorsque le code indique un faible mouvement.
